# EUROPÄISCHE PATENTSCHRIFT

(11) **EP 4 095 397 B1**
(45) Veröffentlichungstag und Bekanntmachung des Hinweises auf die Patenterteilung: **18.09.2024**
(21) Anmeldenummer: 22175690.1
(22) Anmeldetag: 27.05.2022
(51) Int. Cl.: F16B 5/02, F16B 25/00

(54) **VORRICHTUNG ZUM AUSGLEICHEN VON TOLERANZEN ZWISCHEN ZWEI MITEINANDER ZU VERBINDENDEN BAUTEILEN**
DEVICE FOR COMPENSATING FOR TOLERANCES BETWEEN TWO COMPONENTS TO BE CONNECTED TO EACH OTHER
DISPOSITIF DE COMPENSATION DES TOLÉRANCES ENTRE DEUX COMPOSANTS À CONNECTER L'UN À L'AUTRE

(30) Priorität: 27.05.2021 DE 102021205410
(43) Veröffentlichungstag der Anmeldung: 30.11.2022
(73) Patentinhaber: Witte Automotive GmbH, 42551 Velbert (DE)
(72) Erfinder: RADANOVIC, Vladimir, 50735 Köln (DE); LEE, Glen, 50829 Köln (DE); MEIßNER-LINNEMANN, Philipp, 45259 Essen (DE)
(74) Vertreter: Liedtke & Partner Patentanwälte

(56) Entgegenhaltungen:
- EP-B1- 1 780 424
- EP-B1- 2 049 807
- DE-A1- 102013 216 716

## Beschreibung

Die Erfindung betrifft eine Vorrichtung zum Ausgleichen von Toleranzen zwischen zwei miteinander zu verbindenden Bauteilen.

Bekannte Vorrichtungen zum Ausgleichen von Toleranzen zwischen zwei Bauteilen (auch kurz Ausgleichsvorrichtung genannt) sind durch ein Grundelement oder - körper und ein axiales Ausgleichselement, zum Beispiel metallische Gewindehülsen, gebildet, welche in einem Gewindeeingriff, zum Beispiel Linksgewindeeingriff, stehen. In dem axialen Ausgleichselement ist üblicherweise ein Federelement angeordnet, welches einen Reibschluss zwischen einem durch die Ausgleichsvorrichtung hindurchgeführten und ein weiteres Gewinde (Rechtsgewinde) aufweisenden Verbindungselement und dem axialen Ausgleichselement herstellt, so dass beim Anziehen, zum Beispiel Drehen, des Verbindungselements ein Drehmoment auf das axiale Ausgleichselement ausgeübt wird, welches ein axiales Herausdrehen des Ausgleichselements aus dem Grundelement entgegen der Einführrichtung der Verbindungsschraube bewirkt und somit axiale Toleranzen ausgleicht.

Solche Vorrichtungen sind zum Beispiel aus der EP 2 049 807 B1, EP 1 780 424 B1 oder DE 10 2013 216 716 A1 bekannt.

Der Erfindung liegt die Aufgabe zugrunde, eine besonders einfach aufgebaute Vorrichtung zum Ausgleichen von Toleranzen zwischen zwei miteinander zu verbindenden Bauteilen anzugeben.

Die Aufgabe wird erfindungsgemäß mit einer Vorrichtung zum Ausgleichen von Toleranzen zwischen zwei miteinander zu verbindenden Bauteilen mit den Merkmalen des Patentanspruchs 1 gelöst.

Vorteilhafte Weiterbildungen sind Gegenstand der abhängigen Patentansprüche.

Die erfindungsgemäße Vorrichtung zum Ausgleichen von Toleranzen zwischen zwei miteinander zu verbindenden Bauteilen umfasst zumindest ein hohlzylindrisches Grundelement, ein hohlzylindrisches Ausgleichselement, das mit dem Grundelement in Gewindeeingriff steht und das durch Verdrehen relativ zu dem Grundelement aus einer Ausgangsposition in eine Ausgleichsposition bewegbar ist, und ein sich durch einen Hohlraum des Ausgleichselements hindurch erstreckendes Verbindungselement zum Verbinden der beiden Bauteile, wobei der Hohlraum im Querschnitt eine Innenkontur und das Verbindungselement im Querschnitt eine Außenkontur aufweisen, und wobei sich die Innenkontur von der Außenkontur derart unterscheidet, dass bei konzentrischer Ausrichtung der Innenkontur und der Außenkontur mindestens ein radialer Überstand vorliegt.

Insbesondere ermöglicht die Ausgestaltung mit mindestens einem radialen Überstand zumindest abschnittsweise einen gezielten Kraftschluss zwischen dem Verbindungselement und dem Ausgleichselement. Dadurch kann zumindest ein Abschnitt des Verbindungselements, zum Beispiel einer Verbindungsschraube oder eines Gewindebolzens, zur Einhaltung eines Abstands zwischen den zu verbindenden Bauteilen genutzt werden. Hierdurch ist gegenüber herkömmlichen Ausgleichsvorrichtungen eine federfreie Ausbildung der Vorrichtung ermöglicht. Mit anderen Worten: Auf ein separates Federelement als Mitnehmer zum Herausdrehen des Ausgleichselements kann verzichtet werden.

Eine weitere erfindungsgemäße Vorrichtung zum Ausgleichen von Toleranzen zwischen zwei miteinander zu verbindenden Bauteilen umfasst zumindest ein hohlzylindrisches Grundelement, ein hohlzylindrisches Ausgleichselement, das mit dem Grundelement in Gewindeeingriff steht und das durch Verdrehen relativ zu dem Grundelement aus einer Ausgangsposition in eine Ausgleichsposition bewegbar ist, und ein sich durch einen Hohlraum des Ausgleichselements hindurch erstreckendes Verbindungselement zum Verbinden der beiden Bauteile, wobei der Hohlraum im Querschnitt eine Innenkontur und das Verbindungselement im Querschnitt eine Außenkontur aufweisen, und wobei die Innenkontur oder die Außenkontur im Querschnitt mindestens eine sich radial erstreckende Auswölbung aufweist und wobei bei konzentrischer Ausrichtung der Innenkontur und der Außenkontur durch die mindestens eine Auswölbung der Außenkontur oder Innenkontur im Querschnitt des Ausgleichselements mindestens ein radialer Überstand und/oder ein integrierter Mitnehmer, insbesondere ein integrierter Mitnahmeabschnitt, gebildet ist.

Bei der erfindungsgemäßen Vorrichtung ist mittels der Auswölbung durch Reibschlusskontakt der integrierte Mitnehmer und/oder durch Formschlusskontakt der radiale Überstand gebildet. Beispielsweise ist die Auswölbung durch eine nicht kreisförmige Innenkontur oder eine nicht kreisförmige Außenkontur gebildet. Durch die Wechselwirkung von Innenkontur und Außenkontur mittels der Auswölbung ist zumindest ein Kraftschluss direkt zwischen dem Verbindungselement und dem Ausgleichselement gegeben, wodurch das Drehmoment des Verbindungselements auf das Ausgleichselement übertragen und ausgeübt wird. Somit ist die Anzahl der Komponenten der erfindungsgemäßen Vorrichtung reduziert. Die erfindungsgemäße Vorrichtung ist besonders einfach aus wenigen Teilen aufgebaut und in der Herstellung kostengünstig. Dabei erfolgt der Toleranzausgleich zwischen den zwei miteinander zu verbindenden Bauteilen mit hoher Genauigkeit und nur geringem Aufwand.

Beispielsweise ist die Auswölbung der Innenkontur oder der Außenkontur teilkreisförmig oder kreissegmentförmig oder als sphärische Auswölbung ausgebildet. Bevorzugt ist das Ausgleichselement einteilig, insbesondere ohne einen zusätzlichen Mitnehmer oder ein zusätzliches Federelement, ausgebildet. Beispielsweise kann die Vorrichtung federfrei ausgebildet sein. Anstelle eines separaten Mitnehmers bildet die mindestens eine Auswölbung des Ausgleichselements oder des Verbindungselements den radialen Überstand und/oder den integrierten Mitnehmer, insbesondere den integrierten Mitnehmerabschnitt.

Eine Weiterbildung sieht vor, dass, wenn die Innenkontur nicht kreisförmig ausgebildet ist, die Außenkontur kreisförmig ausgebildet ist. Alternativ kann die Innenkontur kreisförmig und die Außenkontur nicht kreisförmig ausgebildet sein. Beispielsweise ist die Innenkontur im Querschnitt oval, elliptisch oder trilobular, insbesondere dreiecksrund, oder vierecksrund und die Außenkontur kreisförmig, insbesondere kreisrund, oder umgekehrt ausgebildet. Durch eine solche Kontur und Gegenkontur von Ausgleichselement und Verbindungselement ist in einfacher Art und Weise ohne zusätzliche Mittel ein besonders wirkungsvoller Kraftschluss und/oder Formschluss und damit ein mitnehmender Eingriff ermöglicht. Aufgrund des zwei- oder mehrfachen, insbesondere dreifachen oder vierfachen, radialen Überstandes und/oder integrierten Mitnehmerabschnitts zwischen der Innen- und Außenkontur kann der einzelne radiale Überstand beziehungsweise der einzelne integrierte Mitnehmerabschnitt möglichst gering ausgelegt sein, um einen hinreichenden Kraftschluss beziehungsweise Formschluss, insbesondere eine Selbsthemmung, zwischen den Konturen zu erzielen. Dabei sind die Innenkontur und die Außenkontur derart korrespondierend zueinander ausgebildet, dass trotz Selbsthemmung zwischen den Konturen ein gewünschtes Verstellen der Position des Ausgleichselements relativ zum Grundelement und somit ein Toleranzausgleich zwischen den Bauteilen und ein Einstellen der Position des einen Bauteils relativ zum anderen Bauteil weiterhin ermöglicht bleibt.

Zusätzlich kann die Innenkontur des Ausgleichselements eine Konusform aufweisen. Hierdurch ist abschnittsweise ein sicherer Kraftschluss zwischen Verbindungselement und Ausgleichselement ermöglicht. Dabei nimmt der Durchmesser der Konusform des Ausgleichselements in Einführrichtung des Verbindungselements ab. Der Kraftschluss im Bereich der Konusform zwischen Verbindungselement und Ausgleichselement nimmt in Einführrichtung des Verbindungselements und entlang einer Längserstreckung des Verbindungselements hingegen zu.

In einem möglichen Ausführungsbeispiel sind die Innenkontur und die Außenkontur derart eingerichtet, dass diese zumindest beim Zusammenbau der Vorrichtung in Reibeingriff miteinander, insbesondere einen Mitnehmereingriff, gelangen. Insbesondere gelangen das Ausgleichselement und das Verbindungselement derart in einem Reibeingriff miteinander, dass, insbesondere beim Zusammenbau der Vorrichtung und dem Verbinden der beiden Bauteile miteinander, ein durch das Verbindungselement ausgeübtes Drehmoment an das Ausgleichselement übertragbar ist. Hierdurch können unerwünschte Abstände zwischen den beiden zu verbindenden Bauteilen ausgeglichen werden.

Das Grundelement und das Ausgleichselement können jeweils aus einem Kunststoffmaterial gebildet sein. Alternativ können auch andere Materialien, wie beispielsweise Metalle, vorgesehen sein. Das Grundelement und das Ausgleichselement können dabei aus demselben Material oder aus unterschiedlichen Materialien gebildet sein.

Je nach Größe des radialen Überstandes können die Innenkontur und die Außenkontur auch in einen Formschluss miteinander gelangen. Je größer der radiale Überstand ist, desto eher gelangen die Innenkontur und die Außenkontur über den Reibschluss hinaus in einen Formschluss miteinander.

Zusätzlich kann die Innenkontur, insbesondere einschließlich deren Auswölbung, und/oder die Außenkontur, insbesondere einschließlich deren Auswölbung, mit einer Eingriffsstruktur versehen sein. Beispielsweise kann die Innenkontur und/oder die Außenkontur mit einer Reibschicht, zum Beispiel einer fein- oder grobkörnigen Oberschicht, versehen sein. Hierdurch wird der Kraftschluss zwischen dem Verbindungselement und dem Ausgleichselement erhöht.

Auch können beziehungsweise kann das Ausgleichselement und/oder das Verbindungselement zumindest teilweise verformbar sein. Durch den insbesondere abschnittsweise geringen radialen Überstand und/oder die mindestens eine Auswölbung zwischen der Innenkontur und der Außenkontur kann es im zusammengebauten Zustand der Vorrichtung zu einer Verformung des Ausgleichselements und/oder des Verbindungselements kommen, insbesondere zu einer geringen Dehnung und/oder Kompression.

Darüber hinaus umgeben das Ausgleichselement und das Grundelement das Verbindungselement koaxial. Das Ausgleichselement und das Grundelement weisen eine Längserstreckung auf, bei der es sich um eine Erstreckung entlang einer Längsachse handelt. Das Ausgleichselement und das Grundelement sind dabei insbesondere rotationssymmetrisch um ihre Längsachsen ausgebildet. Im zusammengebauten Zustand der Vorrichtung fallen die Längsachsen des Ausgleichselements, des Grundelements und des Verbindungselements zusammen. Darüber hinaus ist das Ausgleichselement zum Toleranzausgleich axial beweglich im Grundelement angeordnet.

Ausführungsbeispiele der Erfindung werden anhand von Zeichnungen näher erläutert. Dabei zeigen:
- Figuren 1A bis 1C: in schematischer Darstellung eine Ausführungsform für eine Vorrichtung zum Ausgleichen von Toleranzen zwischen zwei Bauteilen in einer Ausgangsposition mit einem auszugleichenden Höhenspalt zwischen den Bauteilen bzw. in einer Ausgleichsposition mit ausgeglichenem Höhenspalt und ausgeglichener Synchronisierhöhe,
- Figuren 2A und 2B: jeweils in schematischer Darstellung ein erstes Ausführungsbeispiel für eine Innenkontur eines Ausgleichselements und eine Außenkontur eines Verbindungselements,
- Figuren 2C und 2D: jeweils in schematischer Darstellung ein zweites Ausführungsbeispiel für eine Innenkontur eines Ausgleichselements und eine Außenkontur eines Verbindungselements,
- Figuren 2E und 2F: jeweils in schematischer Darstellung ein drittes Ausführungsbeispiel für eine Innenkontur eines Ausgleichselements und eine Außenkontur eines Verbindungselements,
- Figuren 3A und 3B: in Draufsicht bzw. in perspektivischer Ansicht eine Ausführungsform für ein Ausgleichselement,
- Figur 4 in: Schnittdarstellung eine Ausführungsform für die Vorrichtung ohne Verbindungselement,
- Figuren 5A und 5B: in schematischer Darstellung Bewegungsrichtungen von Komponenten der Vorrichtung während eines toleranzausgleichenden Verbindens der zwei Bauteile und die Vorrichtung im zusammengebauten Zustand, wobei das Ausgleichselement in einer Ausgangsposition gestellt ist,
- Figuren 6A und 6B: in schematischer Darstellung Bewegungsrichtungen von Komponenten der Vorrichtung während eines toleranzausgleichenden Verbindens der zwei Bauteile und die Vorrichtung im zusammengebauten Zustand, wobei das Ausgleichselement in einer Ausgleichsposition gestellt ist,
- Figuren 7A und 7B: in perspektivischer und teilgeschnittener Ansicht die Vorrichtung im zusammengebauten Zustand ohne Verbindungselement und ohne zweites Mutterelement, wobei das Ausgleichselement in einer Ausgangsposition gestellt ist, und
- Figuren 8A und 8B: in perspektivischer und teilgeschnittener Ansicht die Vorrichtung im zusammengebauten Zustand ohne Verbindungselement und ohne zweites Mutterelement, wobei das Ausgleichselement in einer Ausgleichsposition gestellt ist.

Einander entsprechende Teile sind in allen Figuren mit den gleichen Bezugszeichen versehen.

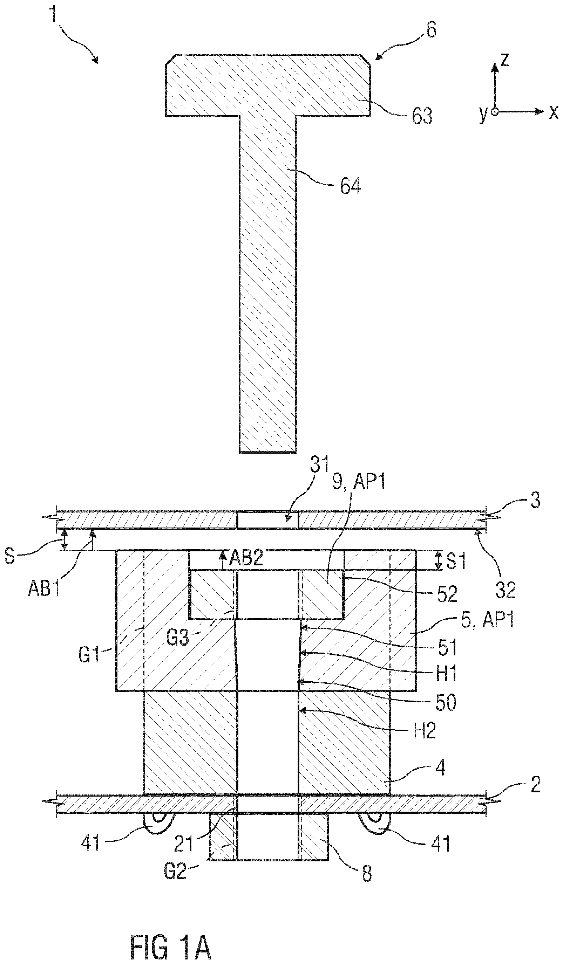

**Figur 1A** zeigt in schematischer Darstellung ein erstes Ausführungsbeispiel für eine Vorrichtung 1 zum Ausgleichen von, insbesondere axialen, Toleranzen, insbesondere eines Höhenspaltes S, zwischen zwei miteinander zu verbindenden Bauteilen. Die Vorrichtung 1 ist beispielsweise zum Anbringen eines ersten Bauteils 2, zum Beispiel eines Lagerbügels, eines Elektronikteils, einer Leuchte, eines Zierteils, an einem zweiten Bauteil 3, zum Beispiel einem Türblech, einer Tragstruktur oder einer Karosseriestruktur eines Fahrzeugs vorgesehen.

Die Vorrichtung 1 umfasst zumindest ein hohlzylindrisches Grundelement 4 und ein hohlzylindrisches Ausgleichselement 5. Das hohlzylindrische Grundelement 4 ist als Halteelement für das erste Bauteil 2 ausgebildet. Hierzu weist das erste Bauteil 2 zumindest eine oder mehrere nicht näher dargestellte Aussparung/en auf. Das Grundelement 4 umfasst zumindest eine oder mehrere flexible Haltenase/n 41, welche die Aussparungen durchgreifen und an einer Unterseite des ersten Bauteils 2 haltend anschlagen.

Die Vorrichtung 1 umfasst darüber hinaus ein Verbindungselement 6, das sich zumindest durch einen ersten Hohlraum H1 der Vorrichtung 1 hindurch erstreckt, um das erste Bauteil 2 und das zweite Bauteil 3 miteinander zu verbinden.

Dabei weist der erste Hohlraum H1 im Querschnitt eine Innenkontur 51 auf. Das Verbindungselement 6 weist im Querschnitt eine Außenkontur 61 auf.

Der erste Hohlraum H1 ist durch den hohlen Innenraum des Ausgleichselements 5 gebildet. Die Innenkontur 51 ist an der Innenwandung des Ausgleichselements 5 ausgebildet.

Darüber hinaus erstreckt sich das Verbindungselement 6 durch einen zweiten Hohlraum H2, der durch den hohlen Innenraum des Grundelements 4 gebildet ist.

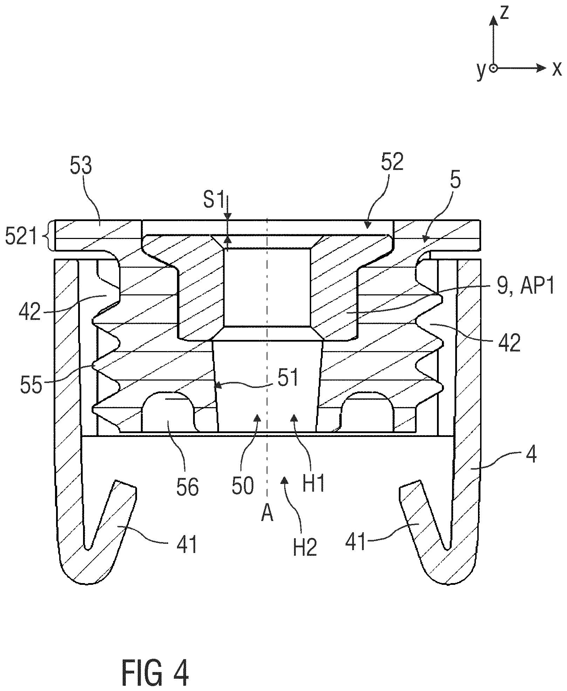

Im Ausführungsbeispiel ist das Grundelement 4 koaxial im Ausgleichselement 5 angeordnet. Alternativ kann das Ausgleichselement 5 koaxial im Grundelement 4 angeordnet sein, wie dies in **Figur 4** dargestellt ist.

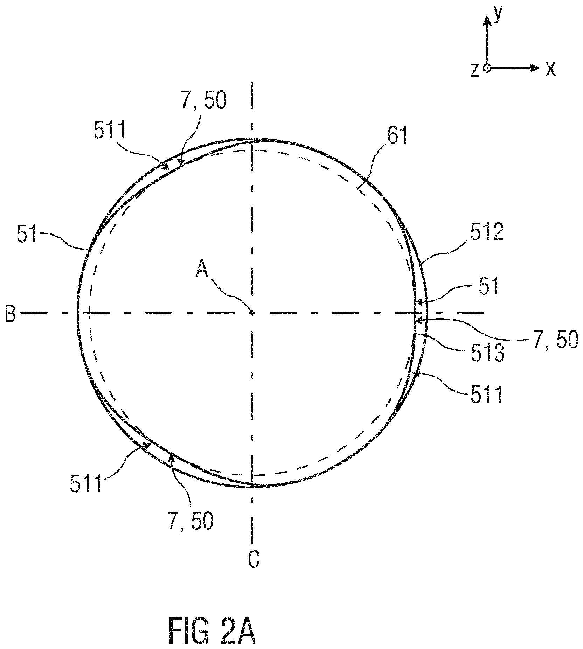

Die Innenkontur 51 (wie in Figuren 2A bis 2D dargestellt) weist im Querschnitt mindestens eine sich radial nach außen erstreckende, insbesondere vom Innenumfang abstehende, Auswölbung 511 auf. Bevorzugt weist die Innenkontur 51 gleichmäßig um den Innenumfang des Ausgleichselements 5 verteilt mehrere Auswölbungen 511 auf.

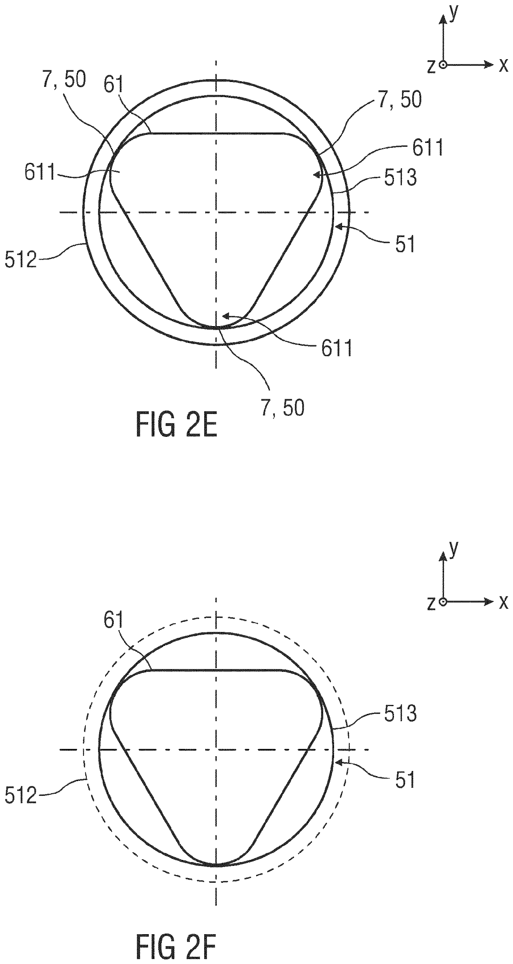

In einer alternativen Ausführungsform der Vorrichtung 1 kann anstelle der Auswölbung 511 an der Innenkontur 51 des Ausgleichselements 5 mindestens eine oder mehrere Auswölbung/en 611 an der Außenkontur 61 des Verbindungselements 6 vorgesehen sein, wie in Figuren 2E, 2F dargestellt.

Bei konzentrischer Ausrichtung der Innenkontur 51 des Ausgleichselements 5 und der Außenkontur 61 des Verbindungselements 6 ist im Querschnitt durch die mindestens eine Auswölbung 511 der Innenkontur 51 (Figuren 2A bis 2D) oder die mindestens eine Auswölbung 611 des Verbindungselements 6 (Figuren 2E und 2F) ein radialer Überstand 7 und/oder ein integrierter Mitnehmer 50, insbesondere ein integrierter Mitnehmerabschnitt, gebildet.

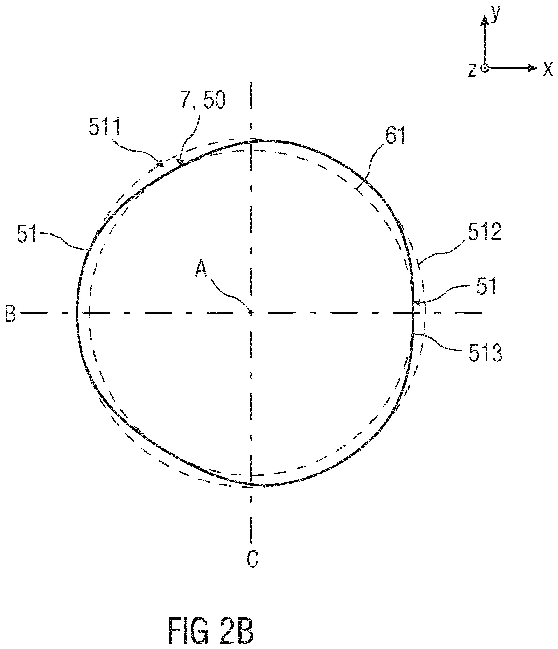

In **Figur 2A** ist ein erstes Ausführungsbeispiel für die Innenkontur 51 und die Außenkontur 61 in Draufsicht von unten dargestellt. Die Außenkontur 61 des Verbindungselements 6 ist kreisförmig, insbesondere rund. Die Innenkontur 51 des Ausgleichselements 5 nach Figur 2A weist drei Auswölbungen 511 auf, die insbesondere gleichmäßig verteilt am Innenumfang des Ausgleichselements 5 angeordnet sind. Figur 2B zeigt die Innenkontur 51 und die Außenkontur 61 gemäß Figur 2A in Draufsicht von oben.

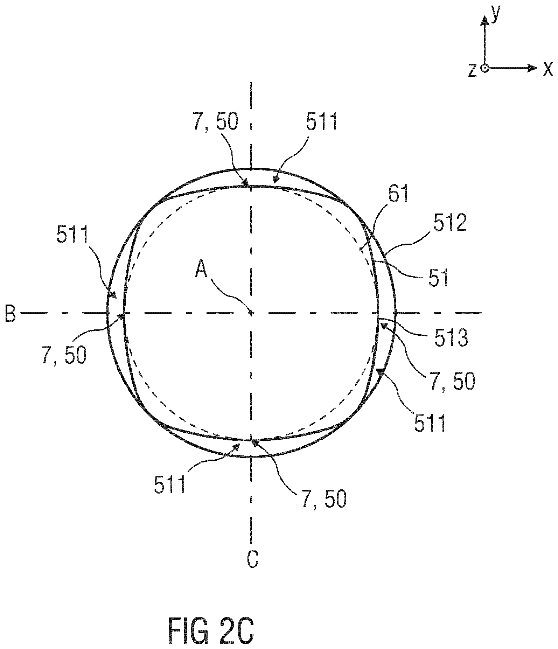

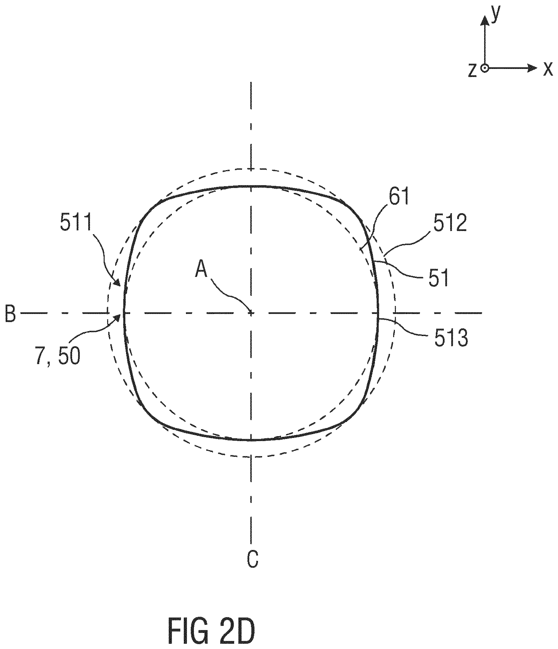

**Figur 2C** zeigt ein zweites Ausführungsbeispiel für die Innenkontur 51 und die Außenkontur 61 in Draufsicht von unten. Die Außenkontur 61 ist kreisförmig, insbesondere rund. Die Innenkontur 51 nach Figur 2C weist vier Auswölbungen 511 auf, die insbesondere gleichmäßig verteilt am Innenumfang des Ausgleichselements 5 angeordnet sind. Figur 2D zeigt die Innenkontur 51 und die Außenkontur 61 gemäß Figur 2C in Draufsicht von oben.

**Figur 2E** zeigt ein drittes Ausführungsbeispiel für die Innenkontur 51 und die Außenkontur 61 in Draufsicht von unten. Die Innenkontur 51 ist kreisförmig, insbesondere rund. Die Außenkontur 61 nach Figur 2E weist drei Auswölbungen 611 auf, die insbesondere gleichmäßig verteilt am Außenumfang des Verbindungselements 6 angeordnet sind. Figur 2F zeigt die Innenkontur 51 und die Außenkontur 61 gemäß Figur 2C in Draufsicht von oben.

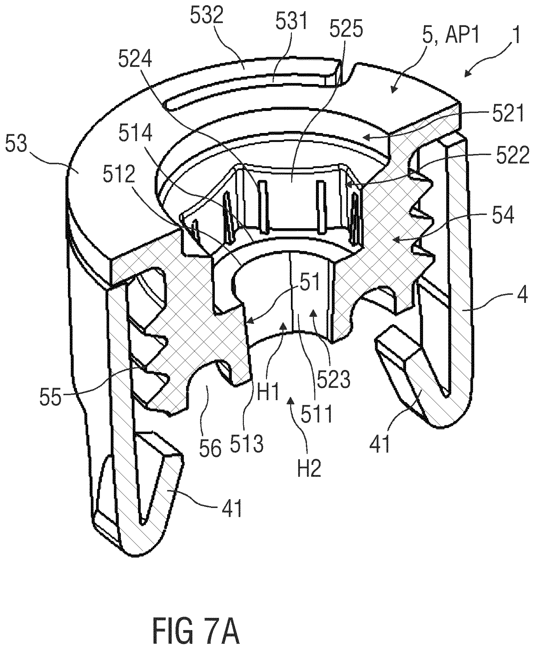

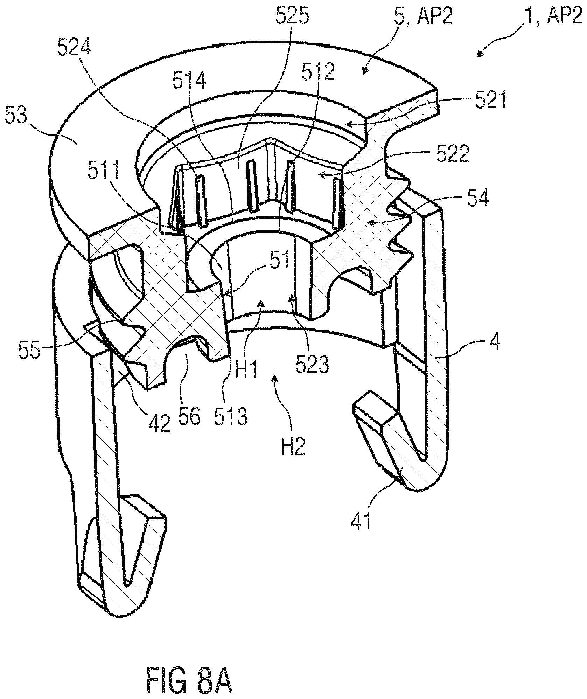

Die Innenkontur 51 des Ausgleichselements 5 ist für alle Ausführungsbeispiele zylinderförmig. Insbesondere ist die jeweilige Innenkontur 51 der verschiedenen Ausführungsbeispiele im Längsschnitt konusförmig oder kegelstumpfförmig mit einem ersten Radius 512 und einem zweiten Radius 513 ausgebildet. Der erste Radius 512 ist größer als der zweite Radius 513, wie in Figur 7A und 8A gezeigt.

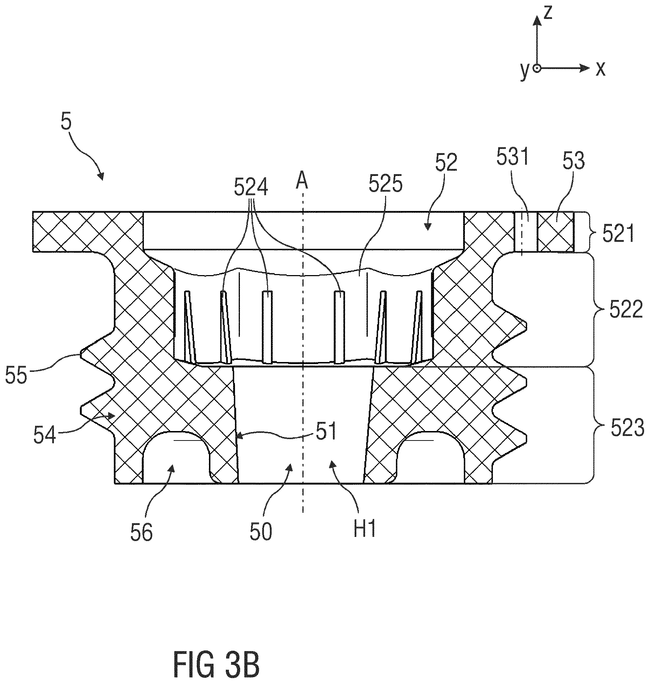

Der erste Radius 512 ist beispielsweise kreisförmig. Der zweite Radius 513 ist beispielsweise dreiecksrund oder trilobular, wie in Figuren 2A und 2B gezeigt, oder vierecksrund, wie in Figuren 2C und 2D gezeigt. Die Auswölbungen 511 am Innenumfang des Ausgleichselements 5 oder die Auswölbungen 611 des Verbindungselements 6 erstrecken sich in Längsausdehnung des Ausgleichselements 5 und des Verbindungselements 6, insbesondere über einen in Figur 3B dargestellten Ausgleichsabschnitt 523.

Die jeweilige Auswölbung 511 oder 611 kann teilkreisförmig oder kreissegmentförmig oder als sphärische Auswölbung ausgebildet sein. Sind mehrere Auswölbungen 511 oder 611 vorgesehen, so weisen alle die gleiche Form auf.

Das Ausgleichselement 5 ist einteilig ausgebildet. Das Ausgleichselement 5 ist federfrei ausgebildet. Das Ausgleichselement 5 weist keine Federelemente auf.

Im gezeigten Ausführungsbeispiel unterscheidet sich die Innenkontur 51 von der Außenkontur 61 derart, dass bei konzentrischer Ausrichtung der Innenkontur 51 und der Außenkontur 61 zueinander der mindestens eine radiale Überstand 7 vorliegt, wie dies in den verschiedenen Ausführungsbeispielen in **Figuren 2A bis 2E** dargestellt ist.

Durch eine solche Ausgestaltung der Konturen mit mindestens einem radialen Überstand 7 und/oder integrierten Mitnehmer 50, insbesondere integrierten Mitnehmerabschnitt, ist zumindest abschnittsweise ein gezielter Kraftschluss zwischen dem Verbindungselement 6 und dem Ausgleichselement 5 ermöglicht. Dadurch kann zumindest ein Abschnitt des Verbindungselements 6 zur Einhaltung eines Abstands zwischen den zu verbindenden Bauteilen 2, 3 genutzt werden. Hierdurch ist gegenüber herkömmlichen Ausgleichsvorrichtungen eine federfreie Ausbildung der Vorrichtung ermöglicht. Durch eine entsprechende Ausgestaltung der Innenkontur 51, insbesondere einer nicht kreisförmigen Innenkontur 51, und kreisrunder Außenkontur 61 oder umgekehrt ist bei der Vorrichtung 1 der integrierte Mitnehmer 50 am Ausgleichselement 5 gebildet. Insbesondere durch die Wechselwirkung von Innenkontur 51 und Außenkontur 61 ist ein Kraftschluss und/oder Formschluss gegeben, wodurch das Drehmoment des Verbindungselement 6 auf das Ausgleichselement 5 übertragen und ausgeübt wird. Darüber hinaus ist die Anzahl der Komponenten der erfindungsgemäßen Vorrichtung reduziert.

**Figur 1A** zeigt die Vorrichtung 1 in einem teilweise zusammengebauten Zustand in einer Ausgangsposition AP1, in welcher das Ausgleichselement 5 mit einem Abstand gemäß eines Höhenspalts S zum zweiten Bauteil 3 angeordnet ist.

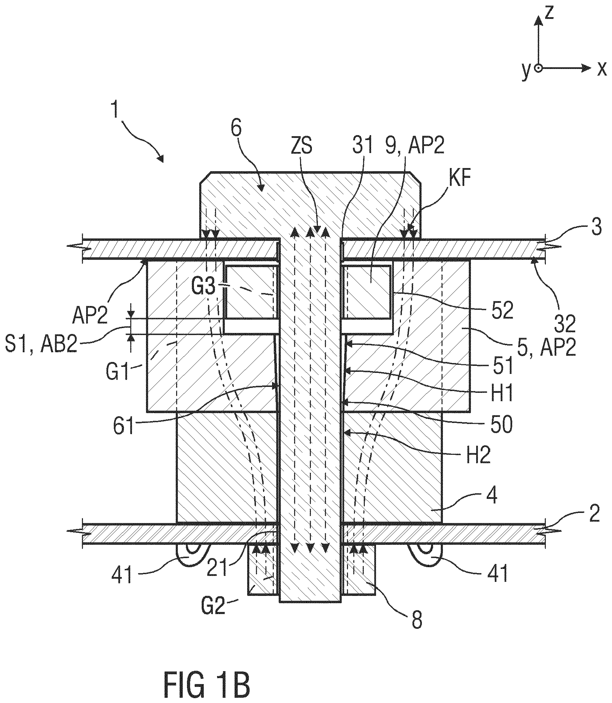

Das Ausgleichselement 5 gelangt zumindest beim Zusammenbau der Vorrichtung 1 in einen ersten Gewindeeingriff G1 mit dem Grundelement 4, wobei das Ausgleichselement 5 durch Verdrehen relativ zu dem Grundelement 4 aus der Ausgangsposition AP1 in eine Ausgleichsposition AP2 zum Ausgleich des Höhenspalts S in einer ersten Ausgleichsbewegung AB1 bewegbar ist, wie dies durch die Abfolge der **Figuren 1A** **und** **1B** dargestellt ist.

**Figur 1B** zeigt die Vorrichtung 1 in der Ausgleichsposition AP2, in welcher der Höhenspalt S ausgeglichen ist und die beiden Bauteile 2 und 3 mittels eines Verbindungselements 6 miteinander verbunden sind, insbesondere mittels einer Klemmverbindung.

Das Verbindungselement 6 ist beispielsweise eine Verbindungsschraube, die sich zumindest durch einen ersten Hohlraum H1 und einen zweiten Hohlraum H2 der Vorrichtung 1 hindurch erstreckt, um das erste Bauteil 2 und das zweite Bauteil 3 miteinander zu verbinden.

Beim Zusammenbau der Vorrichtung 1 gelangt das Verbindungselement 6 mit einem der Bauteile 2, 3 und/oder einem ersten Mutterelement 8 in einen zweiten Gewindeeingriff G2, insbesondere zum Verbinden, insbesondere Verklemmen, der beiden Bauteile 2 und 3 miteinander.

Zur Synchronisation des ersten Gewindeeingriffs G1 und des zweiten Gewindeeingriffs G2 beim Zusammenbau der Vorrichtung 1 ist ein zweites Mutterelement 9 vorgesehen. Das zweite Mutterelement 9 ist dabei im Ausgleichselement 5 derart angeordnet, dass es im Ausgleichselement 5 zumindest abschnittsweise unabhängig vom Ausgleichselement 5 und relativ zu diesem axial, insbesondere entsprechend einer zweiten Ausgleichsbewegung AB2, bewegt wird, wie es nachfolgend näher beschrieben ist.

### Der Zusammenbau läuft wie folgt ab:

Das Grundelement 4 und das Ausgleichselement 5 werden im verschraubten Zustand miteinander an dem ersten Bauteil 2 angeordnet, insbesondere geklipst, zum Beispiel mittels Haltenasen 41 mit dem ersten Bauteil 2 verbunden. Das zweite Mutterelement 9 ist drehfest in einer Aufnahme 52, insbesondere in einem Aufnahmeabschnitt 522, des Ausgleichselements 5 angeordnet.

Das zweite Bauteil 3 wird mit einer Durchgangsöffnung 31 konzentrisch zur Öffnung der Aufnahme 52 angeordnet.

Das Verbindungselement 6, insbesondere eine Schraube mit einem Schraubenkopf 63 und einem Gewindeschaft 64, wird durch die Durchgangsöffnung 31 im zweiten Bauteil 3 in das zweite Mutterelement 9 eingeführt, insbesondere eingeschraubt. Das zweite Mutterelement 9 ist drehfest in dem Ausgleichselement 5 angeordnet.

Das Verbindungselement 6 wird dann weiter in das Ausgleichselement 5 eingeführt und kommt in Kontakt mit einer nicht kreisförmigen Innenkontur 51, insbesondere mit den Auswölbungen 511, des Ausgleichselements 5, wie anhand der Beispiele nach Figuren 2A bis 2D gezeigt. Alternativ, wie beispielsweise in Figuren 2E, 2F gezeigt, kann das Verbindungselement 6 eine nicht kreisförmige Außenkontur 61, insbesondere mit den Auswölbungen 611, aufweisen und die Innenkontur 51 kreisförmig ausgebildet sein. Alternativ kann statt der nicht kreisförmigen Innenkontur 51 ein herkömmliches Mitnahmeelement (nicht näher dargestellt), insbesondere ein Federelement, im Ausgleichselement 5 angeordnet sein.

Dabei kommt es zu einer ersten Ausgleichsbewegung AB1, indem durch die Mitnahme der nicht kreisförmigen Innenkontur 51 oder des Federelements durch das Verbindungselement 6 das Ausgleichselement 5 bis zur Anlage an das zweite Bauteil 3 gebracht wird, wie dies in der **Figur 1B** dargestellt ist. Mit anderen Worten: Das Verbindungselement 6 und das Ausgleichselement 5 gelangen in einen Mitnahmeeingriff durch den integrierten Mitnehmer 50 und/oder den radialen Überstand 7 zur ersten, insbesondere axialen Ausgleichsbewegung AB1. Dabei bewegt sich das Ausgleichselement 5 entgegen der Einführrichtung des Verbindungselements 6 und relativ zum Grundelement 4. Diese erste Ausgleichsbewegung AB 1 in axialer Richtung dient dabei dem Ausgleich von axialen Toleranzen zwischen den beiden Bauteilen 2 und 3. Die maximale Länge der ersten Ausgleichsbewegung AB 1 entspricht dabei in etwa dem Höhenspalt S.

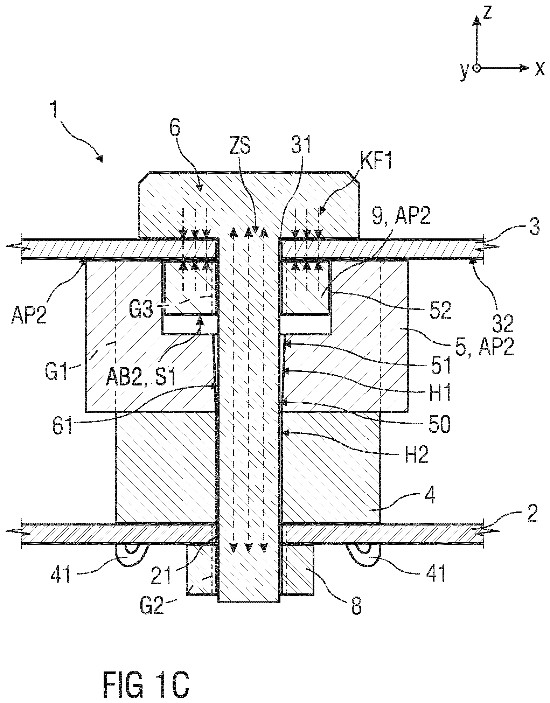

Das Verbindungselement 6 gelangt dabei in einen Reibeingriff mit der Innenkontur 51 des Ausgleichselements 5 durch den integrierten Mitnehmer 50 und/oder den radialen Überstand 7. Infolge des Reibeingriffs überträgt das Verbindungselement 6 ein Drehmoment an das Ausgleichselement 5, so dass sich das Ausgleichselement 5 in entgegengesetzte Richtung zur Einführrichtung des Verbindungselements 6 und relativ zum zweiten Mutterelement 9 und zum Grundelement 4 axial in Richtung des zweiten Bauelements 3 gemäß der ersten Ausgleichsbewegung AB 1 bewegt, bis das Ausgleichselement 5 an der Unterseite 32 des zweiten Bauteils 3 anschlägt, wie in **Figur 1B** **oder** **1C** gezeigt. Diese Position entspricht der Ausgleichsposition AP2. Diese Bewegung des Ausgleichselements 5 beim Eindrehen des Verbindungselements 6 in die Vorrichtung 1 stellt die erste Ausgleichsbewegung AB 1 dar, bei welcher das Ausgleichselement 5 relativ zum Grundelement 4 und zu den Bauteilen 2 und 3 axial in Richtung des zweiten Bauteils 3 bewegt wird. Hierdurch werden axiale Toleranzen zwischen den Bauteilen 2 und 3 ausgeglichen.

Das zweite Mutterelement 9 ist derart im Ausgleichselement 5 angeordnet, dass es bei dieser ersten Ausgleichsbewegung AB1 des Ausgleichselements 5 mitgenommen werden kann. Mit anderen Worten: Das zweite Mutterelement 9 hat sich während dieser ersten Ausgleichsbewegung AB1 des Ausgleichselements 5 zwar relativ zum Grundelement 4 und den Bauteilen 2 und 3, jedoch nicht axial relativ zum Ausgleichselement 5 bewegt. Alternativ kann das zweite Mutterelement 9 in einer Ausnehmung 52 im Ausgleichselement 5 axial nach oben und unten beweglich angeordnet sein, so dass das Ausgleichselement 5 das zweite Mutterelement 9 nicht zwangsläufig mitnimmt.

Beim weiteren Einführen des Verbindungselements 6 in die Vorrichtung 1 kann es dazu kommen, dass der Gewindegang des Verbindungselements 6 nicht gleich in den Gewindegang des ersten Mutterelements 8 eingreifen kann oder diesen trifft.

Um die beiden Gewindegänge zu synchronisieren, wird daher infolge des Gewindeeingriffs zwischen dem zweiten Mutterelement 9 und dem Verbindungselement 6 das zweite Mutterelement 9 axial relativ zum Ausgleichselement 5 und unabhängig von diesem entsprechend der zweiten Ausgleichsbewegung AB2 bewegt. Dabei wird das zweite Mutterelement 9 unabhängig vom Ausgleichselement 5 soweit axial entgegen der Einführrichtung des Verbindungselements 6 bewegt, bis der Gewindegang des Verbindungselements 6 in den Gewindegang des ersten Mutterelements 8 eingreift. Die maximale Länge der zweiten Ausgleichsbewegung AB2 entspricht in etwa einer Synchronisierhöhe S1.

Zur Synchronisation der Gewindeanfänge des zweiten Gewindeeingriffs G2 wird infolge des dritten Gewindeeingriffs G3 zwischen dem Verbindungselement 6 und dem zweiten Mutterelement 9 ein Drehmoment auf das zweite Mutterelement 9 ausgeübt, welches den Formschluss an den Längsstegen 524 überwindet, so dass das zweite Mutterelement 9 axial im oder aus dem Aufnahmeabschnitt 522 entgegen der Einführrichtung des Verbindungselements 6 gedreht wird. Insbesondere wird das zweite Mutterelement 9 axial in Richtung der Flanschoberfläche und unabhängig vom Ausgleichselement 5 und Grundelement 4 im Aufnahmeabschnitt 522 oder aus diesem zumindest teilweise herausgedreht. Insbesondere wird das zweite Mutterelement 9 so lange im Aufnahmeabschnitt 522 axial bewegt, bis der Gewindegang des Verbindungselements 6 in den Gewindegang des ersten Mutterelements 8 eingreift oder einfädelt. Diese Bewegung dient der Synchronisation der Gewindegänge des zweiten Gewindeeingriffs G2 und stellt die zweite Ausgleichsbewegung AB2 dar.

Je nach Anordnung der Gewindegänge zueinander kann die Synchronisierlänge unter Umständen bis zu einer Umdrehung von 360° betragen, bis die Gewindegänge ineinandergreifen. Diese Synchronisierlänge gemäß der zweiten Ausgleichsbewegung AB2 weist eine entsprechende verstellbare Synchronisierhöhe S1 des zweiten Mutterelements 9 auf. Eine Umdrehung kann beispielsweise in etwa einer Gewindesteigung betragen. Diese eine Gewindesteigung kann wiederum in etwa der Synchronisierhöhe S1 und/oder dem Höhenspalt S entsprechen.

Es kann aber auch so sein, dass die zweite Ausgleichsbewegung AB2 den Höhenspalt S nicht vollständig ausgleicht, weil beispielsweise nur eine halbe Gewindesteigung notwendig ist, damit das Verbindungselement 6 in das erste Mutterelement 8 einfädeln kann, insbesondere deren Gewindegänge ineinandergreifen. In diesem Fall ist die Synchronisierhöhe S1 kleiner dem Höhenspalt S, wie dies in **Figur 1B** dargestellt ist.

In diesem Fall, wenn nur das Ausgleichselement 5 gegen das zweite Bauteil 3 mittels des Verbindungselements 6 verspannt wird, verläuft ein entsprechender Kraftfluss KF einer Druckspannung zwischen dem Verbindungselement 6 und dem ersten Mutterelement 8 über das Ausgleichselement 5 und das Grundelement 4.

Darüber hinaus kann das Drehmoment des Befestigungsvorgangs der beiden Bauteile 2 und 3 unter Umständen zu einem gegenüber herkömmlichen Klemmverbindungen veränderten Kraftfluss KF1 einer Druckspannung, insbesondere zu einer Klemmverbindung (auch Klemmung genannt) zwischen dem Verbindungselement 6 und dem zweiten Mutterelement 9, insbesondere zwischen dem Schraubenkopf 63 und dem zweiten Mutterelement 9, führen. Das Verbindungselement 6 wird im zusammengebauten Zustand der Vorrichtung 1 mit einer Zugspannung ZS beaufschlagt.

Dieser geänderte Kraftfluss KF1 ist in **Figur 1C** dargestellt.

Dabei kommt es bei der zweiten Ausgleichsbewegung AB2 zu einer Anlage des zweiten Mutterelements 9 am zweiten Bauteil 3, so dass die Zugkraft des Verbindungselements 6 das zweite Mutterelement 9 mit dem zweiten Bauteil 3 verspannt und diese miteinander fixiert.

Alternativ oder zusätzlich kann es auch bereits beim Zusammenbau und somit beim Einschraubvorgang oder später im zusammengebauten Zustand zu einer Art Setzverhalten zwischen dem Grundelement 4 und dem Ausgleichselement 5 kommen, wenn es sich beispielsweise um Kunststoffteile handelt, so dass sich der veränderte Kraftfluss KF1 stets bei der Vorrichtung 1 einstellt.

In dem Fall des veränderten Kraftflusses KF1 zwischen Verbindungselement 6 und zweitem Mutterelement 9 im zusammengebauten Zustand der Vorrichtung 1 ist eine Klemmlast oder Verspannung zwischen den anderen Komponenten, insbesondere zwischen dem Ausgleichselement 5 und dem Grundelement 4, vermieden.

Das zweite Mutterelement 9 ist derart in der Ausnehmung 52 des Ausgleichselements 5 angeordnet, dass bei einem Eindrehen des Verbindungselements 6 in die Vorrichtung 1 hinein dieses zweite Mutterelement 9 in einen dritten Gewindeeingriff G3 mit dem Verbindungselement 6 gelangt, wobei infolgedessen das zweite Mutterelement 9 beim Eindrehen des Verbindungselements 6 in das erste Bauteil 2 und/oder das erste Mutterelement 8 hinein zumindest abschnittsweise unabhängig vom Ausgleichselement 5 und relativ zu diesem axial bewegt wird, wie dies zuvor im Detail beschrieben ist.

Somit liegen das Ausgleichselement 5 und das Grundelement 4 im zusammengebauten Zustand der Vorrichtung 1 außerhalb des veränderten Kraftflusses KF1 des zweiten Mutterelements 9 mit dem Verbindungselement 6. Durch den Kraftschluss des Verbindungselements 6 mit dem zweiten Mutterelement 9 über den dritten Gewindeeingriff G3 wird das zweite Mutterelement 9 ohne das Ausgleichselement 5 in der Vorrichtung 1 axial bewegt, wodurch eine einfache Synchronisation der nachfolgenden ersten und zweiten Gewindeeingriffe G1 und G2 ermöglicht ist.

Erfindungsgemäß unterscheidet sich die Innenkontur 51 von der Außenkontur 61 derart, dass bei konzentrischer Ausrichtung der Innenkontur 51 und der Außenkontur 61 zueinander mittels der Auswölbungen 511 oder 611 radiale Überstände 7 und/oder integrierte Mitnehmer 50 gebildet sind beziehungsweise ist, wie dies in **Figur 2A bis 2E** dargestellt ist.

Durch eine solche Ausgestaltung der Konturen mit mindestens einem radialen Überstand 7 und/oder mit mindestens einem integrierten Mitnehmer 50 ist zumindest abschnittsweise ein gezielter Kraftschluss zwischen dem Verbindungselement 6 und dem Ausgleichselement 5 ermöglicht. Dadurch kann zumindest ein Abschnitt des Verbindungselements 6 zur Einhaltung eines Abstands zwischen den zu verbindenden Bauteilen 2, 3 genutzt werden. Hierdurch ist gegenüber herkömmlichen Ausgleichsvorrichtungen eine federfreie Ausbildung der Vorrichtung ermöglicht. Durch eine entsprechende Ausgestaltung der Innenkontur 51, insbesondere einer nicht kreisförmigen Innenkontur 51, ist bei der Vorrichtung 1 der radiale Überstand 7 und/oder der integrierte Mitnehmer 50 am Ausgleichselement 5 gebildet. Insbesondere durch die Wechselwirkung von Innenkontur 51 und Außenkontur 61 ist ein Kraftschluss gegeben, wodurch das Drehmoment des Verbindungselements 6 auf das Ausgleichselement 5 übertragen und ausgeübt wird. Darüber hinaus ist die Anzahl der Komponenten der erfindungsgemäßen Vorrichtung 1 reduziert.

**Figuren 2A** **und** **2B** zeigen jeweils in vereinfachter schematischer Darstellung im Querschnitt die Innenkontur 51 des Ausgleichselements 5 und die Außenkontur 61 des Verbindungselements 6. Die in **Figur 2A** oder **2B** dargestellte Innenkontur 51 und die Außenkontur 61 liegen in einer Ebene, die durch zwei Achsen B und C aufgespannt wird, wobei die Achse B und die Achse C senkrecht zueinander und senkrecht zur Längsachse A der Vorrichtung 1 ausgerichtet sind. Die Längsachse A durchläuft dabei den Schnittpunkt der beiden Achsen B und C.

Die jeweilige Innenkontur 51 ist im Wesentlichen nicht kreisförmig. Die jeweilige Außenkontur 61 ist im Wesentlichen kreisförmig. Im Ausführungsbeispiel ist die Innenkontur 51 trilobular ausgebildet und weist drei runde Ecken auf, auch als Dreieck-Rund bezeichnet. Alternativ kann die Innenkontur 51 oval oder elliptisch ausgebildet sein, wobei dann anstelle von drei radialen Überständen 7 und/oder integrierten Mitnehmern 50 nur zwei radiale Überstände 7 ausgebildet sind. Auch kann die Innenkontur 51 derart ausgebildet sein, dass vier radiale Überstände 7 und/oder integrierte Mitnehmer 50 gebildet sind, wie in **Figur 2B** gezeigt. Eine solche Innenkontur 51 wird auch als Viereck-Rund bezeichnet.

Alternativ kann die Außenkontur 61 nicht kreisförmig und die Innenkontur 51 im Wesentlichen kreisförmig ausgebildet sein, wie in **Figuren 2E und 2F** gezeigt.

Zum Verbinden der beiden Bauteile 2 und 3 ist an der Unterseite des ersten Bauteils 2 ein erstes Mutterelement 8 vorgesehen. Das erste Mutterelement 8 kann ein separates Element sein. Alternativ kann das erste Mutterelement 8 an das erste Bauteil 2 angeschweißt sein. Das erste Bauteil 2 und das zweite Bauteil 3 umfassen jeweils zugehörige Durchgangsöffnungen 21 bzw. 31 für das Verbindungselement 6. In einer weiteren alternativen Ausführungsform kann das erste Bauteil 2 selbst ein Innengewinde als Mutter aufweisen, wobei das Innengewinde in der zugehörigen Durchgangsöffnung 21 ausgebildet ist.

Zum Zusammensetzen der Vorrichtung 1 werden das erste Bauteil 2 und das zweite Bauteil 3 miteinander verschraubt. Dabei wird beispielsweise die Vorrichtung 1 beispielsweise mittels des Grundelements 4 am ersten Bauteil 2 angeordnet und dort gehalten, zum Beispiel mittels der Haltenasen 41. Auf der vom Grundelement 4 abgewandten Seite des Ausgleichselements 5 wird das zweite Bauteil 3 angeordnet. Anschließend wird das Verbindungselement 6 durch die Durchgangsöffnung 31 im zweiten Bauteil 3, den ersten Hohlraum H1 und den zweiten Hohlraum H2 sowie die Durchgangsöffnung 21 im ersten Bauteil 2 hindurch geführt und in das erste Bauteil 2 und/oder das erste Mutterelement 8 eingeschraubt.

Dabei gelangen das Ausgleichselement 5 und das Verbindungselement 6 zumindest abschnittsweise, insbesondere im Bereich der Innenkontur 51 und der Außenkontur 61, in Reibeingriff miteinander. So gelangen das Ausgleichselement 5 und das Verbindungselement 6 derart in Reibeingriff miteinander, dass beim Verbinden der beiden Bauteile 2 und 3 miteinander ein durch das Verbindungselement 6 ausgeübtes Drehmoment an das Ausgleichselement 5 übertragbar ist. Durch die Verschraubung der Bauteile 2 und 3 miteinander wird der unerwünschte Höhenspalt S zwischen den beiden zu verbindenden Bauteilen 2 und 3 ausgeglichen und geschlossen, indem das Ausgleichselement 5 während der Verschraubung axial von einer Ausgangsposition AP1 in die Ausgleichsposition AP2 gemäß Pfeil PF1 bewegt wird. In der Ausgangsposition AP1 ist das Ausgleichselement 5 mit einem Abstand gemäß Höhenspalt S zu einer Unterseite 32 des zweiten Bauteils 3 angeordnet, wie dies in **Figur 1A** dargestellt ist. In der Ausgleichsposition AP2 (gestrichelt dargestellt) liegt das Ausgleichselement 5 an der Unterseite 32 des zweiten Bauteils 3 an, wie dies in **Figur 1B** **oder** **1C** dargestellt ist.

Das Grundelement 4 und das Ausgleichselement 5 können jeweils aus einem Kunststoffmaterial gebildet sein. Alternativ können auch andere Materialien, wie beispielsweise Metalle, vorgesehen sein. Das Grundelement 4 und das Ausgleichselement 5 können aus demselben Material oder aus unterschiedlichen Materialien gebildet sein.

Je nach Größe und/oder Anzahl des radialen Überstandes 7 können die Innenkontur 51 und die Außenkontur 61 auch in einen Formschluss miteinander gelangen. Je größer der radiale Überstand 7 ist, desto eher gelangen die Innenkontur 51 und die Außenkontur 61 über den Reibschluss hinaus in einen Formschluss miteinander.

Optional kann die Innenkontur 51 und/oder die Außenkontur 61 mit einer Eingriffsstruktur (nicht näher dargestellt) versehen sein. Beispielsweise kann die Innenkontur 51 und/oder die Außenkontur 61 mit einer Reibschicht, zum Beispiel einer fein- oder grobkörnigen Oberschicht, versehen sein. Hierdurch wird der Kraftschluss zwischen dem Verbindungselement 6 und dem Ausgleichselement 5 im Bereich der ineinandergreifenden Konturen erhöht.

Darüber hinaus umfasst die Vorrichtung 1 ein zweites Mutterelement 9. Das zweite Mutterelement 9 dient der Synchronisation von Ausgleichsbewegungen des Ausgleichselements 5 zum Grundelement 4 und des Verbindungselements 6 zum Ausgleichselement 5 und zum ersten Mutterelement 8, wie dies zuvor zu den **Figuren 1B** **und** **1C** beschrieben ist. Hierzu ist das zweite Mutterelement 9 in einer Ausnehmung 52 des Ausgleichselements 5 angeordnet.

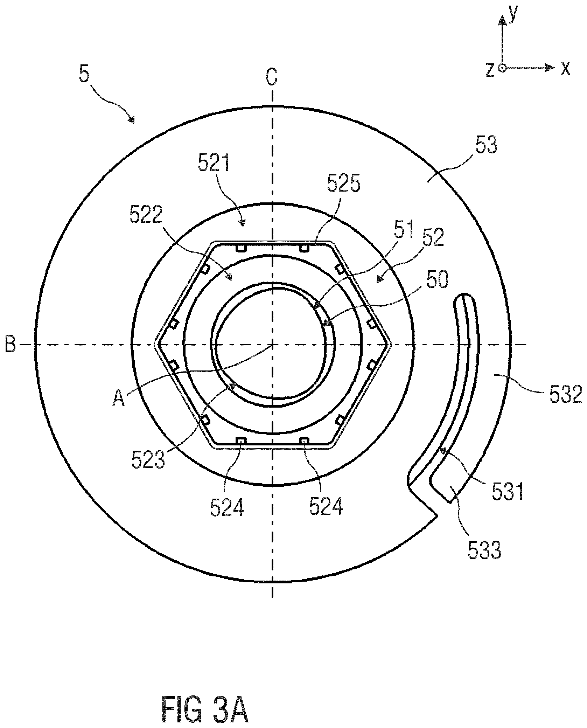

**Figuren 3A** **und** **3B** zeigen in Draufsicht bzw. in perspektivischer Ansicht eine Ausführungsform für das axiale Ausgleichselement 5.

Das axiale Ausgleichselement 5 weist einen Flansch 53 auf. Der Flansch 53 ist als eine Auskragung oder ein radialer Überstand an einem hohlzylindrischen Schaft 54 ausgebildet.

Die Ausnehmung 52 ist abgestuft ausgebildet. Im Ausführungsbeispiel weist die Ausnehmung 52 einen ersten Ausgleichsabschnitt 521 für das zweite Mutterelement 9, einen Aufnahmeabschnitt 522 für das zweite Mutterelement 9 und einen zweiten Ausgleichsabschnitt 523 für das Ausgleichselement 5 auf.

Wie in **Figur 3A** gezeigt, weist der zweite Ausgleichsabschnitt 523 eine nicht kreisförmige Innenkontur 51, insbesondere im Querschnitt eine trilobulare Form, auf, welche eine Reibeingriff mit dem Verbindungselement 6 bei dessen Eindrehen ermöglicht. Wie in **Figur 2B** gezeigt, kann die Innenkontur 51 auch eine andere geeignete Querschnittsform, insbesondere eine Zwei-, Vier- oder Mehreck-Rundform aufweisen.

Wie in **Figur 3B** gezeigt, weist die Innenkontur 51 darüber hinaus im Längsschnitt eine Konusform auf. Diese Konusform unterstützt dabei den Reibeingriff von Verbindungselement 6 und Ausgleichselement 5 während der toleranzausgleichenden Bewegung zwischen den beiden Bauteilen 2 und 3.

Zusätzlich kann die Innenkontur 51 mit einer nicht näher dargestellten Eingriffsstruktur, insbesondere einer Reibschicht, versehen sein.

Das zweite Mutterelement 9 ist in seiner Ausgangsposition AP1 im Aufnahmeabschnitt 522 formschlüssig angeordnet. Der Aufnahmeabschnitt 522 weist dazu eine Anzahl von, insbesondere symmetrisch verteilten, Längsstegen 524 auf. Das zweite Mutterelement 9 wird beim Zusammenbau der Vorrichtung 1 in den Aufnahmeabschnitt 522 eingesetzt, insbesondere eingepresst, wobei durch die Längsstege 524 ein Formschluss zwischen dem zweiten Mutterelement 9 und dem Ausgleichselement 5 gebildet wird.

Das zweite Mutterelement 9 ist beispielsweise eine Sechskantmutter. Der Aufnahmeabschnitt 522 weist hierzu innenseitig und zumindest abschnittsweise eine entsprechende Sechskantkontur 525 auf.

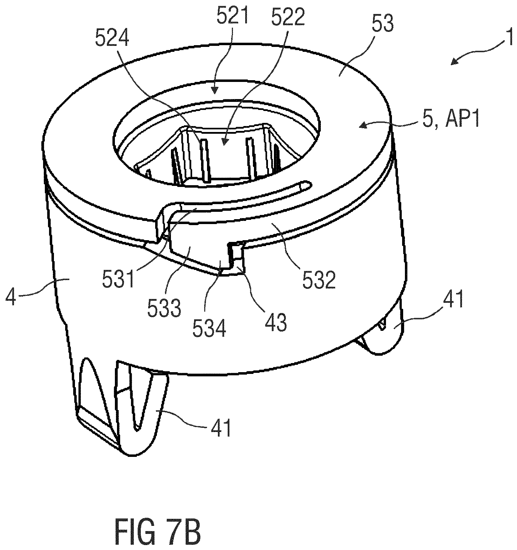

Im Bereich des Flansches 53 ist eine schlitzförmige Ausnehmung 531 eingebracht. Dadurch ist ein flexibler Sicherungsarm 532 gebildet, der in **Figur 7B** näher erläutert wird.

Wie in **Figur 3B** gezeigt, erstrecken sich die Längsstege 524 entlang der Längsachse A zumindest bereichsweise im Bereich des Aufnahmeabschnitts 522. Dabei weisen die Längsstege 524 in Richtung des ersten Ausgleichsabschnitts 521 eine abnehmende Höhe auf. Darüber hinaus weisen die Längsstege 524 eine derartige Form und/oder Abmessungen auf, dass das zweite Mutterelement 9 in dem Aufnahmeabschnitt 522 zumindest formschlüssig, insbesondere in Drehrichtung des Verbindungselements 6, angeordnet ist. Zudem ist das zweite Mutterelement 9 reibschlüssig, insbesondere in axialer Richtung entlang der Längsachse A, im Aufnahmeabschnitt 522 angeordnet.

Das zweite Mutterelement 9 weist dabei eine Höhe auf, die in etwa der Höhe des Aufnahmeabschnitts 522 entspricht.

Beim Einführen des Verbindungselements 6 in das zweite Mutterelement 9 gelangen diese in Gewindeeingriff miteinander. Das zweite Mutterelement 9 weist hierzu ein entsprechendes Innengewinde auf. Das Verbindungselement 6 ist als eine Verbindungsschraube oder ein Gewindebolzen mit einem korrespondierenden Außengewinde ausgebildet.

Darüber hinaus kann die Innenkontur 51 des Ausgleichselements 5 nachgiebig oder flexibel oder federnd ausgebildet sein. Hierzu umfasst das Ausgleichselement 5 an seiner dem Flansch 53 gegenüberliegenden Stirnseite eine Ringnut 56. Die Ringnut 56 dient insbesondere der Verhinderung von Materialanhäufung bei einem Spritzprozess eines aus Kunststoff gefertigten Ausgleichselements 5. Darüber hinaus ermöglicht ein solches aus Kunststoff gefertigtes Ausgleichselement 5 mit Ringnut 56 eine federnde Gleichdickform.

Das Ausgleichselement 5 weist darüber hinaus ein Ausgleichsgewinde 55 auf im gezeigten Ausführungsbeispiel nach **Figuren 3A** **und** **3B**. Das Ausgleichsgewinde 55 ist im jeweiligen Ausführungsbeispiel nach **Figuren 1A-1C****, 5B, 6B** ein Innengewinde und im jeweiligen Ausführungsbeispiel nach **Figuren 3B****,** **4****,** **7A****,** **8A** ein Außengewinde.

Zum Gewindeeingriff zwischen dem Ausgleichselement 5 und dem Grundelement 4 weist das Grundelement 4 ein zugehöriges Grundelementgewinde 42 auf, das beispielhaft in den nachfolgenden **Figuren 4****,** **7A** **und** **8A** gezeigt ist. In dem jeweiligen Ausführungsbeispiel nach **Figuren 4****,** **7A****, und** **8A** ist das Grundelementgewinde 42 ein Innengewinde. Im jeweiligen Ausführungsbeispiel nach **Figuren 1A bis 1C****, 5B und 6B** ist das Grundelementgewinde 42 ein Außengewinde.

Das Grundelementgewinde 42 kann als ein Gewindegang mit einer einzelnen Gewindespitze ausgebildet sein. Alternativ kann das Grundelementgewinde 42 auch mehrere Gewindegänge mit entsprechenden Gewindespitzen, insbesondere zwei Gewindespitzen, aufweisen. Bei nur einem Gewindegang ist vorteilhafterweise ein Auf-/Zu-Werkzeug ermöglicht und somit eine kostengünstige Produktion. Bei zwei oder mehr Gewindegängen ist hingegen zusätzlich ein drehbarer Kern zur Entformung erforderlich.

**Figur 4** zeigt in Schnittdarstellung die Vorrichtung 1 ohne Verbindungselement 6.

Das zweite Mutterelement 9 ist in der Ausgangsposition AP1 im Aufnahmeabschnitt 522 formschlüssig angeordnet. Der erste Ausgleichsabschnitt 521 stellt jene Synchronisierhöhe S1 dar, die das zweite Mutterelement 9 beim Eindrehen des Verbindungselements 6 in das erste Mutterelement 8 unabhängig vom Ausgleichselement 5 zum Synchronisieren der Gewindegänge gemäß der zweiten Ausgleichsbewegung AB2 axial ausgleicht, ohne dass das Ausgleichselement 5 axial bewegt wird, wie dies beispielhaft zu den **Figuren 1B** **und** **1C** beschrieben ist und gezeigt ist.

Diese zweite Ausgleichsbewegung AB2 dient der Synchronisation der Gewindeeingriffe, insbesondere dem Ausgleichsgewindeeingriff zwischen Ausgleichselement 5 und Grundelement 4 und dem Befestigungseingriff zwischen Verbindungselement 6 und erstem Mutterelement 8. Hierzu ist das zweite Mutterelement 9 in der Ausnehmung 52 im Ausgleichselement 5 um mindestens die Synchronisierhöhe S1, insbesondere um mindestens eine Gewindesteigung des ersten Gewindeeingriffs G1 tiefer als die Stirn- oder Flanschoberfläche des Ausgleichselements 5 angeordnet, insbesondere eingepresst.

Mit anderen Worten: Die Synchronisierhöhe S1 entspricht mindestens einer Gewindesteigung. Diese innenliegende Lage des zweiten Mutterelements 9 in der Ausgangsposition AP1 ermöglicht die axiale Bewegung des zweiten Mutterelements 9 ohne axiale Bewegung des Ausgleichselements 5.

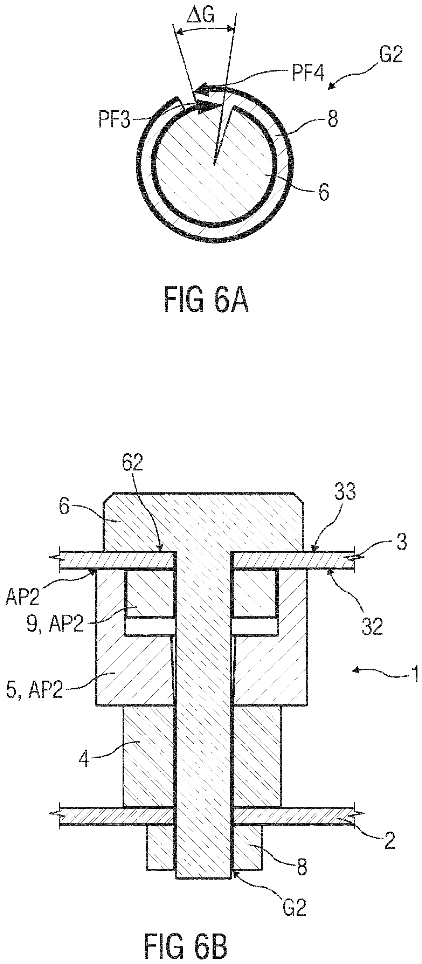

Darüber hinaus kann sich das zweite Mutterelement 9 zumindest teilweise auch aus der Ausnehmung 52 heraus bewegen. Insbesondere kann sich das zweite Mutterelement 9 beim Zusammenbau der Vorrichtung 1 während der zweiten Ausgleichsbewegung AB2 derart aus der Ausnehmung 52 herausbewegen, bis das zweite Mutterelement 9 an der Unterseite 32 des zweiten Bauteils 3 anschlägt, wie dies beispielhaft in **Figuren 1C** **und** **6B** gezeigt ist. Die alleinige Bewegung des zweiten Mutterelements 9 beim Eindrehen des Verbindungselements 6 in die Vorrichtung 1, insbesondere in das erste Mutterelement 8, stellt die zweite Ausgleichsbewegung AB2 relativ zum Ausgleichselement 5 und Grundelement 4 sowie zu den Bauteilen 2 und 3 dar.

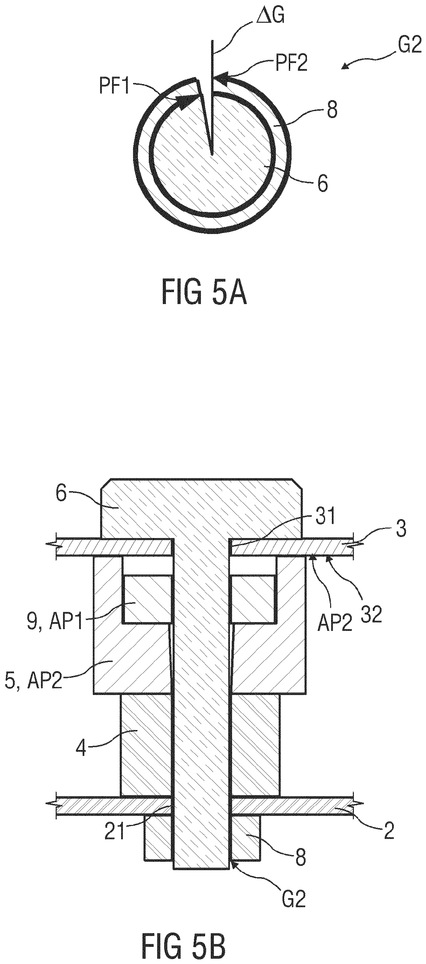

**Figur 5A** zeigt in vereinfachter schematischer Querschnittsdarstellung den Bereich des zweiten Gewindeeingriffs G2 zwischen dem Verbindungselement 6 und dem ersten Mutterelement 8, nachdem das Ausgleichselement 5 infolge der ersten Ausgleichsbewegung AB1 in seine Ausgleichsposition AP2 gestellt ist und bevor deren Gewindeanfänge beim Einschrauben des Verbindungselements 6 in das erste Mutterelement 8 einfädeln oder ineinandergreifen. Dabei ist in diesem Ausführungsbeispiel ein Gewindeversatz ΔG von annähernd null (auch kurz Nullversatz genannt) zwischen den beiden Gewindeanfängen des zweiten Gewindeeingriffs G2 gegeben. Somit fädeln die beiden Gewindeanfänge beim Einschrauben des Verbindungselements 6 in das erste Mutterelement 8 miteinander ein, wie dies die Pfeile PF1, PF2 zeigen.

**Figur 5B** zeigt die Vorrichtung 1 im zusammengebauten Zustand, wobei das Ausgleichselement 5 aufgrund dessen ersten Ausgleichsbewegung AB1 während des Zusammenbaus in seine Ausgleichsposition AP2 gestellt ist. Aufgrund des Gewindeversatzes ΔG ist keine Synchronisation der Gewindeanfänge des zweiten Gewindeeingriffs G2 erforderlich. Somit findet in diesem Ausführungsbeispiel keine zweite Ausgleichsbewegung AB2 des zweiten Mutterelements 9 statt. Dabei verbleibt das zweite Mutterelement 9 in seiner Ausgangsposition AP1. Das Ausgleichselement 5 ist infolge der ersten Ausgleichsbewegung AB1 in seine Ausgleichsposition AP2 gestellt und liegt an der Unterseite 32 des zweiten Bauteils 3 an.

Infolge der Einfädelung der Gewindeanfänge ohne Synchronisation kann das Verbindungselement 6 in das erste Mutterelement 8 eingeschraubt werden, bis eine Kopfunterseite 62 des Verbindungselements 6 an eine Oberseite 33 des zweiten Bauteils 3 anschlägt. In diesem zusammengebauten Endzustand der Vorrichtung 1 sind die beiden Bauteile 2 und 3 mittels der Vorrichtung 1 axiale Toleranzen ausgleichend miteinander verbunden.

Das erste Mutterelement 8 kann separat ausgebildet sein oder an das erste Bauteil 2 befestigt, insbesondere geschweißt sein.

In einer alternativen, nicht näher dargestellten Ausführungsform weist das erste Bauteil 2 in der Durchgangsöffnung 21 ein Bauteilgewinde auf, in welches das Verbindungselement 6 verbindend eingreift, so dass das erste Mutterelement 8 entfallen kann.

**Figur 6A** zeigt in vereinfachter schematischer Querschnittdarstellung ein weiteres Beispiel für den Bereich des zweiten Gewindeeingriffs G2 zwischen dem Verbindungselement 6 und dem ersten Mutterelement 8, nachdem das Ausgleichselement 5 infolge der ersten Ausgleichsbewegung AB1 in seine Ausgleichsposition AP2 gestellt ist und bevor die Gewindeanfänge des zweiten Gewindeeingriffs G2 beim Einschrauben des Verbindungselements 6 in das erste Mutterelement 8 einfädeln oder ineinandergreifen. Das Ausgleichselement 5 ist bereits in seine Ausgleichsposition AP2 gestellt.

Beim weiteren Eindrehen des Verbindungselements 6 in das erste Mutterelement 8 kann es dazu kommen, dass der Gewindegang des Verbindungselements 6 nicht gleich in den Gewindegang des ersten Mutterelements 8 eingreifen kann oder diesen trifft.

Im gezeigten Ausführungsbeispiel nach **Figur 6A** ist ein Gewindeversatz ΔG von größer null zwischen den beiden Gewindeanfängen des zweiten Gewindeeingriffs G2 gegeben. Somit ist es notwendig, die beiden Gewindeanfänge zu synchronisieren, damit sie sicher einfädeln können, wie dies anhand der Pfeile PF3 und PF4 dargestellt ist. Im gezeigten Ausführungsbeispiel beträgt der Gewindeversatz ΔG circa 350°.

Um die beiden Gewindegänge des zweiten Gewindeeingriffs G2 zu synchronisieren, wird daher infolge des dritten Gewindeeingriffs G3 zwischen dem zweiten Mutterelement 9 und dem Verbindungselement 6 das zweite Mutterelement 9 axial relativ zum Ausgleichselement 5 und unabhängig von diesem entsprechend der zweiten Ausgleichsbewegung AB2 bewegt. Dabei wird das zweite Mutterelement 9 unabhängig vom Ausgleichselement 5 soweit axial entgegen der Einführrichtung des Verbindungselements 6 bewegt, bis der Gewindegang des Verbindungselements 6 in den Gewindegang des ersten Mutterelements 8 eingreift. Die maximale Länge der zweiten Ausgleichsbewegung AB2 entspricht in etwa einer Synchronisierhöhe S1.

Je nach Anordnung der Gewindegänge zueinander kann die Synchronisierhöhe S1 unter Umständen bis zu einer Umdrehung von 360° betragen, bis die Gewindegänge ineinandergreifen. Eine Umdrehung kann beispielsweise in etwa einer Gewindesteigung entsprechen. Diese eine Gewindesteigung kann wiederum in etwa der Synchronisierhöhe S1 und/oder dem Höhenspalt S entsprechen.

**Figur 6B** zeigt die Vorrichtung 1 im zusammengebauten Zustand, wobei aufgrund des großen Gewindeversatzes ΔG sowohl das Ausgleichselement 5 als auch das zweite Mutterelement 9 in die Ausgleichsposition AP2 gestellt ist.

Nach Synchronisation der Gewindegänge des zweiten Gewindeeingriffs G2 wird durch eine weitere Eindrehbewegung des Verbindungselements 6 in die Vorrichtung 1 hinein das Verbindungselement 6 in das erste Mutterelement 8 einschraubt, bis die Kopfunterseite 62 des Verbindungselements 6 an die Oberseite 33 des zweiten Bauteils 3 anschlägt. In diesem zusammengebauten Endzustand der Vorrichtung 1 sind die beiden Bauteile 2 und 3 mittels der Vorrichtung 1 axiale Toleranzen ausgleichend miteinander verbunden.

Das erste Mutterelement 8 kann separat ausgebildet sein oder an das erste Bauteil 2 befestigt, insbesondere geschweißt sein.

In einer alternativen, nicht näher dargestellten Ausführungsform weist das erste Bauteil 2 in der Durchgangsöffnung 21 ein Bauteilgewinde auf, in welches das Verbindungselement 6 verbindend eingreift, so dass das erste Mutterelement 8 entfallen kann.

**Figuren 7A** **und** **7B** zeigen in perspektivischer und teilgeschnittener Ansicht die Vorrichtung 1 im zusammengebauten Zustand ohne Verbindungselement 6 und zweites Mutterelement 9, wobei das Ausgleichselement 5 in die Ausgangsposition AP1 gestellt ist.

Die Innenkontur 51 ist konusförmig mit dem ersten Radius 512 am oberen Ende des zweiten Ausgleichsabschnitts 523 und dem zweiten Radius 513 am unteren Ende des zweiten Ausgleichsabschnitts ausgebildet. Der erste Radius 512 ist größer als der zweite Radius 513. Zusätzlich kann im oberen Rand des zweiten Ausgleichsabschnitts 523 eine Fase 514 eingebracht sein.

Wie in **Figur 7B** gezeigt, weist ein freies Ende 533 des Sicherungsarms 532 des Ausgleichselements 5 einen Vorsprung 534 auf, welcher in Eingriff mit einer Sicherungsausnehmung 43 im Grundelement 4 steht, bevor der Zusammenbau mit den Bauelementen 2 und 3 erfolgt. Durch den Eingriff des Vorsprungs 534 in der Sicherungsausnehmung 43 ist eine Verdrehsicherung zwischen Ausgleichselement 5 und Grundelement 4 ausgebildet. Diese Verdrehsicherung zwischen Ausgleichselement 5 und Grundelement 4 dient als Lagersicherung bei einer Vormontage der Vorrichtung 1 am ersten Bauteil 2 und/oder als Transportsicherung der Vorrichtung 1 vor einer Montage an den Bauteilen 2 und 3.

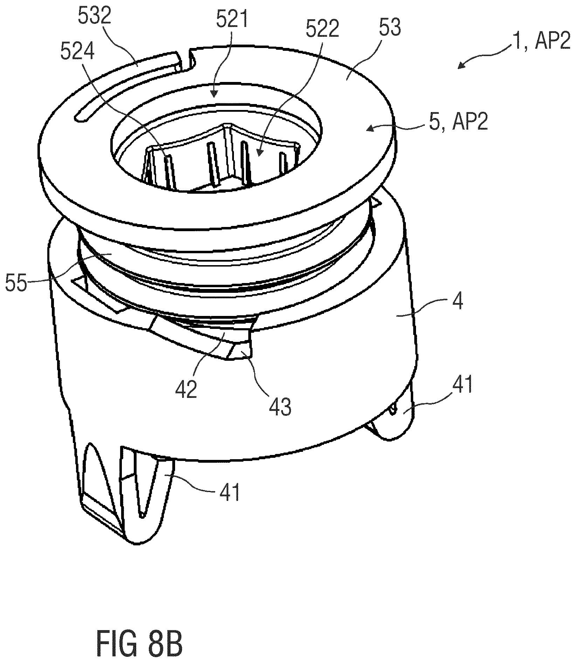

**Figuren 8A** **und** **8B** zeigen in perspektivischer und teilgeschnittener Ansicht die Vorrichtung 1 im zusammengebauten Zustand ohne Verbindungselement 6 und zweites Mutterelement 9, wobei das Ausgleichselement 5 in die Ausgleichsposition AP2 gestellt ist.

### BEZUGSZEICHENLISTE

- 1: Vorrichtung
- 2: erstes Bauteil
- 21: Durchgangsöffnung
- 3: zweites Bauteil
- 31: Durchgangsöffnung
- 32: Unterseite
- 33: Oberseite
- 4: Grundelement
- 41: Haltenasen
- 42: Grundelementgewinde
- 43: Sicherungsausnehmung
- 5: Ausgleichselement
- 50: integrierter Mitnehmer
- 51: Innenkontur
- 511: Auswölbung
- 512: erster Radius
- 513: zweiter Radius
- 514: Fase
- 52: Ausnehmung
- 521: erster Ausgleichsabschnitt
- 522: Aufnahmeabschnitt
- 523: zweiter Ausgleichsabschnitt
- 524: Längssteg
- 525: Sechskantkontur
- 53: Flansch
- 531: Ausnehmung
- 532: Sicherungsarm
- 533: freies Ende
- 54: hohlzylindrischer Schaft
- 55: Ausgleichsgewinde
- 56: Ringnut
- 6: Verbindungselement
- 61: Außenkontur
- 611: Auswölbung
- 62: Kopfunterseite
- 63: Schraubenkopf
- 64: Gewindeschaft
- 7: Überstand
- 8: erstes Mutterelement
- 9: zweites Mutterelement

- A: Längsachse
- AB1: erste Ausgleichsbewegung
- AB2: zweite Ausgleichsbewegung
- AP1: Ausgangsposition
- AP2: Ausgleichsposition
- B, C: Achsen (Querachsen)
- G1: erster Gewindeeingriff
- G2: zweiter Gewindeeingriff
- G3: dritter Gewindeeingriff
- H1: erster Hohlraum
- H2: zweiter Hohlraum
- KF: Kraftfluss
- KF1: veränderter Kraftfluss
- PF1 bis PF: Pfeile
- S: Höhenspalt
- S1: Synchronisierhöhe
- ZS: Zugspannung

- ΔG: Gewindeversatz

## Patentansprüche

1. Vorrichtung (1) zum Ausgleichen von Toleranzen zwischen zwei miteinander zu verbindenden Bauteilen (2, 3) mit
- einem hohlzylindrischen Grundelement (4), und
- einem hohlzylindrischen Ausgleichselement (5), das mit dem Grundelement (4) in einem ersten Gewindeeingriff (G1) steht und das durch Verdrehen relativ zu dem Grundelement (4) aus einer Ausgangsposition (AP1) in eine Ausgleichsposition (AP2) bewegbar ist,
- einem sich zumindest durch einen ersten Hohlraum (H1) der Vorrichtung (1) hindurch erstreckenden Verbindungselement (6) zum Verbinden der beiden Bauteile (2, 3),
wobei der erste Hohlraum (H1) im Querschnitt eine Innenkontur (51) und das Verbindungselement (6) im Querschnitt eine Außenkontur (61) aufweisen, wobei die Innenkontur (51) oder die Außenkontur (61) im Querschnitt mindestens eine sich radial erstreckende Auswölbung (511, 611) aufweist und wobei bei konzentrischer Ausrichtung der Innenkontur (51) und der Außenkontur (61) durch die mindestens eine Auswölbung (511) der Innenkontur (51) oder der Außenkontur (61) im Querschnitt mindestens ein radialer Überstand (7) und/oder ein integrierter Mitnehmer (50) gebildet ist, und
wobei das Verbindungselement (6) beim Zusammenbau der Vorrichtung (1) in einen zweiten Gewindeeingriff (G2) mit einem ersten Mutterelement (8) gelangt, **dadurch gekennzeichnet dass**
das Ausgleichselement (5) eine Ausnehmung (52) aufweist, in welcher zur Synchronisation des ersten Gewindeeingriffs (G1) und des zweiten Gewindeeingriffs (G2) ein zweites Mutterelement (9) drehfest und axial bewegbar vorgesehen ist

2. Vorrichtung (1) nach Anspruch 1, wobei die Auswölbung (511, 611) teilkreisförmig oder kreissegmentförmig oder als sphärische Auswölbung ausgebildet ist.

3. Vorrichtung (1) nach Anspruch 1 oder 2, wobei das Ausgleichselement (5) einteilig ausgebildet ist.

4. Vorrichtung (1) nach einem der vorhergehenden Ansprüche **gekennzeichnet durch** eine federfreie Ausbildung.

5. Vorrichtung (1) nach einem der vorhergehenden Ansprüche, wobei, wenn die Innenkontur (51) nicht kreisförmig ausgebildet ist, die Außenkontur (61) kreisförmig ausgebildet ist oder umgekehrt.

6. Vorrichtung (1) nach einem der vorhergehenden Ansprüche, wobei die Innenkontur (51) oder die Außenkontur (61) im Querschnitt oval, elliptisch oder trilobular ausgebildet ist.

7. Vorrichtung (1) nach einem der vorhergehenden Ansprüche, wobei die Innenkontur (51) eine Konusform aufweist.

8. Vorrichtung (1) nach einem der vorhergehenden Ansprüche, wobei die Innenkontur (51) und die Außenkontur (61) zumindest beim Zusammenbau der Vorrichtung (1) in einen Reibeingriff miteinander gelangen.

9. Vorrichtung (1) nach einem der vorhergehenden Ansprüche, wobei das Ausgleichselement (5) und das Verbindungselement (6) derart in einen Reibeingriff gelangen, dass ein durch das Verbindungselement (6) ausgeübtes Drehmoment an das Ausgleichselement (5) übertragbar ist.

10. Vorrichtung (1) nach einem der vorhergehenden Ansprüche, wobei die Innenkontur (51) mit einer Eingriffsstruktur versehen ist.

11. Vorrichtung (1) nach einem der vorhergehenden Ansprüche, wobei das Ausgleichselement (5) zumindest teilweise verformbar ist.

12. Vorrichtung (1) nach einem der vorhergehenden Ansprüche, wobei das Ausgleichselement (5) und das Grundelement (4) das Verbindungselement (6) koaxial umgeben.

13. Vorrichtung (1) nach einem der vorhergehenden Ansprüche, wobei das Ausgleichselement (5) axial beweglich in dem Grundelement (4) angeordnet ist.

## Claims

1. Device (1) for compensating for tolerances between two components (2, 3) to be connected to one another, having
- a hollow-cylindrical base element (4), and
- a hollow-cylindrical compensation element (5) which is in a first threaded engagement (G1) with the base element (4) and is movable by rotation relative to the base element (4) from a starting position (AP1) to a compensation position (AP2),
- a connecting element (6), extending at least through a first cavity (H1) in the device (1), for connecting the two components (2, 3),
wherein the first cavity (H1) has, in cross section, an inner contour (51) and the connecting element (6) has, in cross section, an outer contour (61),
wherein the inner contour (51) or the outer contour (61) has, in cross section, at least one radially extending bulge (511, 611), and
wherein, in the event of a concentric orientation of the inner contour (51) and the outer contour (61), the at least one bulge (511) of the inner contour (51) or of the outer contour (61) forms, in cross section, at least one radial protrusion (7) and/or an integrated driver (50), and
wherein, when the device (1) is assembled, the connecting element (6) passes into a second threaded engagement (G2) with a first nut element (8), **characterized in that** the compensation element (5) has an aperture (52) in which a second nut element (9) is rotationally fixedly and axially movably provided for synchronization of the first threaded engagement (G1) and the second threaded engagement (G2) .

2. Device (1) according to Claim 1, wherein the bulge (511, 611) is part-circular or in the shape of a circle segment or in the form of a spherical bulge.

3. Device (1) according to Claim 1 or 2, wherein the compensation element (5) is of one-part design.

4. Device (1) according to one of the preceding claims, **characterized by** a spring-free design.

5. Device (1) according to one of the preceding claims, wherein, when the inner contour (51) is not circular, the outer contour (61) is circular, or vice versa.

6. Device (1) according to one of the preceding claims, wherein the inner contour (51) or the outer contour (61) is, in cross section, oval, elliptical or trilobular.

7. Device (1) according to one of the preceding claims, wherein the inner contour (51) has a cone shape.

8. Device (1) according to one of the preceding claims, wherein the inner contour (51) and the outer contour (61) pass into frictional engagement with one another at least when the device (1) is assembled.

9. Device (1) according to one of the preceding claims, wherein the compensation element (5) and the connecting element (6) pass into frictional engagement in such a way that a torque exerted by the connecting element (6) is transmittable to the compensation element (5).

10. Device (1) according to one of the preceding claims, wherein the inner contour (51) is provided with an engagement structure.

11. Device (1) according to one of the preceding claims, wherein the compensation element (5) is at least partially deformable.

12. Device (1) according to one of the preceding claims, wherein the compensation element (5) and the base element (4) coaxially surround the connecting element (6).

13. Device (1) according to one of the preceding claims, wherein the compensation element (5) is axially movably arranged in the base element (4).

## Revendications

1. Dispositif (1) de compensation des tolérances entre deux composants (2, 3) à assembler l'un à l'autre, avec
- un élément de base (4) cylindrique creux, et
- un élément de compensation (5) cylindrique creux, qui est en un premier engagement par filetage (G1) avec l'élément de base (4) et qui est apte à être déplacé par rotation par rapport à l'élément de base (4), d'une position initiale (AP1) à une position de compensation (AP2),
- un élément de liaison (6) s'étendant au moins à travers une première cavité (H1) du dispositif (1) pour relier les deux composants (2, 3),
la première cavité (H1) présentant en section transversale un contour intérieur (51) et l'élément de liaison (6) présentant en section transversale un contour extérieur (61), le contour intérieur (51) ou le contour extérieur (61) présentant en section transversale au moins un renflement (511, 611) s'étendant radialement et, en cas d'orientation concentrique du contour intérieur (51) et du contour extérieur (61), au moins une saillie radiale (7) et/ou un entraîneur intégré (50) étant formé(e) en section transversale par ledit au moins un renflement (511) du contour intérieur (51) ou du contour extérieur (61), et
l'élément de liaison (6) venant, lors de l'assemblage du dispositif (1), en un deuxième engagement par filetage (G2) avec un premier élément écrou (8), **caractérisé en ce que**
l'élément de compensation (5) présente un évidement (52) dans lequel un deuxième élément écrou (9) est prévu de manière fixe en rotation et mobile axialement pour la synchronisation du premier engagement par filetage (G1) et du deuxième engagement par filetage (G2).

2. Dispositif (1) selon la revendication 1, dans lequel le renflement (511, 611) est conçu sous forme de cercle partiel ou de segment de cercle ou de renflement sphérique.

3. Dispositif (1) selon la revendication 1 ou la revendication 2, dans lequel l'élément de compensation (5) est réalisé d'une seule pièce.

4. Dispositif (1) selon l'une des revendications précédentes, **caractérisé par** une conception sans ressort.

5. Dispositif (1) selon l'une des revendications précédentes, dans lequel, lorsque le contour intérieur (51) n'est pas de forme circulaire, le contour extérieur (61) est de forme circulaire ou inversement.

6. Dispositif (1) selon l'une des revendications précédentes, dans lequel le contour intérieur (51) ou le contour extérieur (61) présente une section ovale, elliptique ou trilobée.

7. Dispositif (1) selon l'une des revendications précédentes, dans lequel le contour intérieur (51) présente une forme conique.

8. Dispositif (1) selon l'une des revendications précédentes, dans lequel le contour intérieur (51) et le contour extérieur (61) viennent en prise de frottement l'un avec l'autre au moins lors de l'assemblage du dispositif (1).

9. Dispositif (1) selon l'une des revendications précédentes, dans lequel l'élément de compensation (5) et l'élément de liaison (6) arrivent en prise par friction de telle sorte qu'un couple exercé par l'élément de liaison (6) est apte à être transmis à l'élément de compensation (5).

10. Dispositif (1) selon l'une des revendications précédentes, dans lequel le contour intérieur (51) est pourvu d'une structure d'engagement.

11. Dispositif (1) selon l'une des revendications précédentes, dans lequel l'élément de compensation (5) est au moins partiellement déformable.

12. Dispositif (1) selon l'une des revendications précédentes, dans lequel l'élément de compensation (5) et l'élément de base (4) entourent coaxialement l'élément de liaison (6) .

13. Dispositif (1) selon l'une des revendications précédentes, dans lequel l'élément de compensation (5) est disposé de manière à pouvoir se déplacer axialement dans l'élément de base (4).
